# EUROPÄISCHE PATENTANMELDUNG

(11) **EP 4 768 422 A1**
(43) Veröffentlichungstag der Anmeldung: **01.07.2026**
(21) Anmeldenummer: 25219704.1
(22) Anmeldetag: 01.12.2025
(51) Int. Cl.: B66F 9/075, B66F 9/24, G05D 1/243, G05D 1/667

(54) **FLURFÖRDERZEUG ZUM TRANSPORT VON WARENOBJEKTEN IN EINEM WARENLAGER**

(30) Priorität: 27.12.2024 DE 102024139797; 12.02.2025 DE 102025105196
(71) Anmelder: STILL GmbH, 22113 Hamburg (DE)
(72) Erfinder: Howey, Ansgar, 22926 Ahrensburg (DE)
(74) Vertreter: Patentship Patentanwaltgesellschaft

(57) **Zusammenfassung**

Die Erfindung betrifft ein Flurförderzeug (120a,b) zum Transport von Warenobjekten (140), insbesondere in einem Warenlager. Das Flurförderzeug (120a,b) umfasst eine oder mehrere Bilderfassungseinheiten (130a), insbesondere Kameras (130a), welche ausgebildet sind, eine Vielzahl von Bilddaten der Umgebung des Flurförderzeugs (120a,b) zu erfassen, und eine Steuereinheit (123), welche ausgebildet ist, bildliche Zusatzinformationen zu den Bilddaten der Vielzahl von Bilddaten hinzuzufügen. Ferner umfasst das Flurförderzeug eine Datenbrille (128), insbesondere eine Assisted-Reality Datenbrille (128), welche von einem Fahrer des Flurförderzeugs (120a,b) aufsetzbar ist und ausgebildet ist, die bildlichen Zusatzinformationen, insbesondere die Vielzahl von Bilddaten zusammen mit den hinzugefügten bildlichen Zusatzinformationen, auf einem Anzeigeelement der Datenbrille (128) darzustellen, insbesondere in einem Bereich des Anzeigeelements, der in einem sekundären Blickfeld des Fahrers des Flurförderzeugs (120a,b) liegt.

## Beschreibung

Die Erfindung betrifft ein Flurförderzeug zum Transport von Warenobjekten, insbesondere in einem Warenlager.

Für den Transport und die Lagerung von Produkten, Waren und Materialien werden oftmals Ladungsträger, beispielsweise Gitterboxen oder Paletten, insbesondere Europaletten, verwendet. Zur Handhabung derartiger Ladungsträger, z.B. in der Intralogistik, d.h. dem innerbetrieblichen Materialfluss, z.B. in einem Warenlager, werden in der Regel Flurförderzeuge, z.B. Gabelstapler, und dergleichen eingesetzt. Ein Warenlager ist in der Regel ein sehr dynamisches Umfeld, in dem die Steuerung der Flurförderzeuge in der Regel entweder manuell, teilautomatisiert oder vollautomatisiert, d.h. fahrerlos erfolgt und daher ein komplexes Problem mit vielen Facetten darstellt.

Vor diesem Hintergrund liegt der vorliegenden Erfindung die Aufgabe zu Grunde, ein verbessertes Flurförderzeug zum Transport von Warenobjekten, insbesondere in einem Warenlager, bereitzustellen.

Diese Aufgabe wird durch ein nachstehend näher beschriebenes Flurförderzeug zum Transport von Warenobjekten, insbesondere in einem Warenlager, gelöst. Das Flurförderzeug umfasst eine oder mehrere Bilderfassungseinheiten, insbesondere Kameras, welche ausgebildet sind, eine Vielzahl von Bilddaten der Umgebung des Flurförderzeugs zu erfassen, sowie eine Steuereinheit, welche ausgebildet ist, bildliche Zusatzinformationen zu den Bilddaten der Vielzahl von Bilddaten hinzuzufügen. Erfindungsgemäß umfasst das Flurförderzeug ferner eine Datenbrille, welche von einem Fahrer des Flurförderzeugs zum Betreiben des Flurförderzeugs aufsetzbar ist und ausgebildet ist, die bildlichen Zusatzinformationen, insbesondere die Vielzahl von Bilddaten zusammen mit den hinzugefügten bildlichen Zusatzinformationen, auf einem Anzeigeelement der Datenbrille darzustellen, insbesondere in einem Bereich des Anzeigeelements, der in einem sekundären Blickfeld des Fahrers des Flurförderzeugs liegt.

Gemäß einer Ausführungsform umfasst das Flurförderzeug ferner ein Lastaufnahmemittel, welches ausgebildet ist, die Warenobjekte aufzunehmen.

In einer Ausführungsform ist das Flurförderzeug als Gabelstapler ausgebildet.

Gemäß einer Ausführungsform umfasst das Flurförderzeug ferner eine Kommunikationsschnittstelle, welche ausgebildet ist, drahtlos oder drahtgebunden die Vielzahl von Bilddaten zusammen mit den hinzugefügten bildlichen Zusatzinformationen an die Datenbrille zu übertragen.

In einer Ausführungsform ist die Kommunikationsschnittstelle ferner ausgebildet, die bildlichen Zusatzinformationen von einer externen Servervorrichtung zu erhalten und an die Steuereinheit weiterzuleiten.

Gemäß einer Ausführungsform ist die Datenbrille ausgebildet, eine Kopforientierung und/oder eine Blickrichtung des Fahrers des Flurförderzeugs zu bestimmen.

In einer Ausführungsform ist die Datenbrille ausgebildet, die Vielzahl von Bilddaten zusammen mit den hinzugefügten bildlichen Zusatzinformationen in einem Bereich des Anzeigeelements der Datenbrille darzustellen, der von der Kopforientierung und/oder der Blickrichtung des Fahrers des Flurförderzeugs abhängt. Mit anderen Worten: in einer Ausführungsform hängt der Bereich des Anzeigeelements der Datenbrille, wo die Bilddaten dargestellt werden, von der aktuellen Kopforientierung und/oder der aktuellen Blickrichtung des Fahrers des Flurförderzeugs ab.

Gemäß einer Ausführungsform umfasst das Flurförderzeug eine Vielzahl von Bilderfassungseinheiten, insbesondere Kameras, mit unterschiedlichen Bilderfassungsrichtungen, d.h. Blickrichtungen, welche ausgebildet sind, die Vielzahl von Bilddaten der Umgebung des Flurförderzeugs in den unterschiedlichen Bilderfassungsrichtungen zu erfassen, wobei die Datenbrille ausgebildet ist, die Bilddaten der Vielzahl von Bilddaten darzustellen, die mit der Bilderfassungseinheit der Vielzahl von Bilderfassungseinheiten erfasst werden, deren Bilderfassungsrichtung der Blickrichtung des Fahrers des Flurförderzeugs entspricht.

In einer Ausführungsform können die der Vielzahl von Bilddaten hinzugefügten bildlichen Zusatzinformationen Kollisionsinformationen, Entfernungsinformationen, und/oder Objektinformationen zu wenigstens einem in der Vielzahl von Bilddaten detektierten Objekt umfassen.

Gemäß einer Ausführungsform basieren die Kollisionsinformationen, Entfernungsinformationen, und/oder Objektinformationen zu dem wenigstens einem in der Vielzahl von Bilddaten detektierten Objekt auf einem Machine Learning, ML, Modell, insbesondere einem neuronalen Netzwerk, welches von der Steuereinheit des Flurförderzeugs implementiert ist.

Weitere Vorteile und Einzelheiten der Erfindung werden beispielhaft anhand der in den schematischen Figuren dargestellten Ausführungsbeispiele näher erläutert. Hierbei zeigt:
Figur 1 eine schematische Darstellung eines Flurförderzeugs gemäß einer Ausführungsform zum Transport von Warenobjekten, insbesondere in einem Warenlager; und
Figur 2 eine schematische Darstellung einer Vielzahl von Flurförderzeugen gemäß einer Ausführungsform zum Transport von Warenobjekten, insbesondere in einem Warenlager.

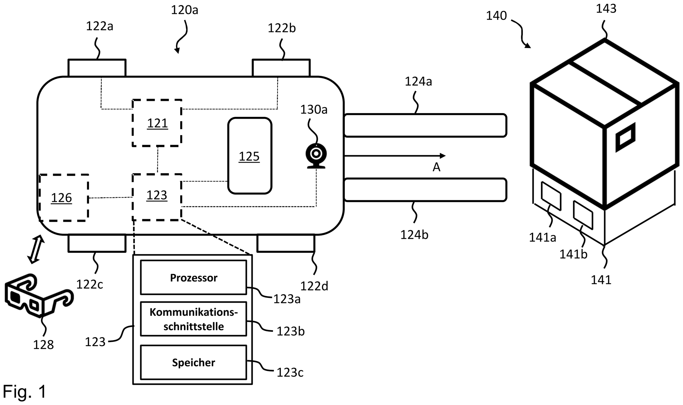

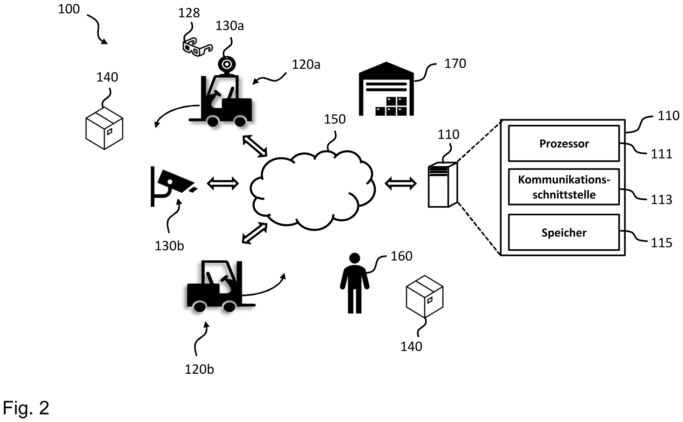

Figur 1 zeigt eine schematische Darstellung eines erfindungsgemäßen Flurförderzeugs 120a zum Transportieren von Warenobjekten 140 in einem industriellen Umfeld (im Folgenden auch als Umgebung 100 bezeichnet), insbesondere einem Warenlager. Wie in Figur 2 dargestellt, können in dem Warenlager neben den Warenobjekten 140 weitere Objekte vorhanden sein, beispielsweise Fußgänger 160 und Infrastrukturobjekte 170, beispielsweise Regalen 170. Bei dem Flurförderzeug 120a kann es sich insbesondere um einen zumindest zeitweise teil-autonom und/oder manuell betreibbaren, d.h. von einem Fahrer geführten Gabelstapler 120a handeln. Bei den Warenobjekten 140 kann es sich beispielsweise um Waren 143, wie Verpackungskartons 143, handeln, welche auf einem jeweiligen Ladungsträger 141 angeordnet sind. Bei dem Ladungsträger 141 kann es sich beispielsweise um eine Palette 141, insbesondere eine Euro-Palette 141, oder eine Gitterbox 141 handeln.

Wie in Figur 2 dargestellt, kann eine Vielzahl von erfindungsgemäßen Flurförderzeugen 120a,b von einem Server 110, insbesondere einem Edge-Cloud-Server 110, verwaltet werden, beispielsweise indem ein auf dem Server 110 implementiertes Warenmanagementsystem Transportaufträge an die Vielzahl von Flurförderzeugen 120a,b verteilt. Wie in der Figur 2 dargestellt, kann der Server 110 einen Prozessor 111, eine Kommunikationsschnittstelle 113 und einen, insbesondere nichtflüchtigen, Speicher 115 umfassen. Der Speicher 115 kann ausgebildet sein, Daten und ausführbaren Programmcode zu speichern, der, wenn von dem Prozessor 111 des Servers 110 ausgeführt, den Prozessor 111 veranlasst, die im Folgenden beschriebenen Funktionen, Operationen und Verfahren durchzuführen. In einer Ausführungsform ist die Kommunikationsschnittstelle 113 des Servers 110 ausgebildet, drahtlos und/oder drahtgebunden mit den Flurförderzeugen 120a,b und/oder externen Sensoreinheiten 130b zu kommunizieren. Beispielsweise kann die Kommunikationsschnittstelle 113 des Servers 110 ausgebildet sein, über ein Kommunikationsnetzwerk, z.B. ein WLAN, 5G-Netzwerk, 6G-Netzwerk und/oder das Internet 150 mit den Flurförderzeugen 120a,b und den externen Sensoreinheiten 130 zu kommunizieren, um Daten auszutauschen.

Wie in Figur 1 dargestellt, kann das Flurförderzeug 120a ein Lastaufnahmemittel in Form eines Paares von Lastgabeln 124a,b umfassen, welche ausgebildet sind, in jeweilige Aussparungen, insbesondere Taschen 141a,b an einer Stirnseite des Ladungsträgers 141 eingebracht zu werden, um den Ladungsträger 141 sowie die darauf angeordnete Ware 143 aufzunehmen. Gemäß weiteren Ausführungsformen kann das Lastaufnahmemittel auch als Dorn beispielsweise für die Aufnahme von Folienrollen oder Drahtcoils, als unterhakendes Lastaufnahmemittel (z. B. vergleichbar mit Müllfahrzeugen zur Aufnahme der Mülltonnen), oder als Ballen- und Rollenklammern beispielsweise zur Aufnahme von Papierrollen ausgebildet sein.

Das in Figur 1 dargestellte Flurförderzeug 120a umfasst ferner eine Antriebseinheit 121, beispielsweise wenigstens einen Motor 121, insbesondere einen batteriebetriebenen Elektromotor 121, wobei die Antriebseinheit 121 ausgebildet ist, das Flurförderzeug 120a und das Paar von Lastgabeln 124a,b relativ zu dem Warenobjekt 140 zu bewegen, um beispielsweise die Orientierung und/oder den Abstand zwischen dem Flurförderzeug 120a und dem Warenobjekt 140, insbesondere dem Ladungsträger 141 zu ändern und/oder das Paar von Lastgabeln 124a,b anzuheben oder abzusenken. Zu diesem Zweck kann, wie in Figur 1 angedeutet, die Antriebseinheit 121 geeignet mit Rädern 122a-d und/oder dem Paar von Lastgabeln 124a,b des Flurförderzeugs 120a verbunden sein. Das Flurförderzeug 120a kann ferner ein Anzeige- und/oder Bedienfeld 125 zur Anzeige von Informationen und/oder zum Bedienen des Flurförderzeugs 120a umfassen.

Das Flurförderzeug 120a umfasst ferner eine oder mehrere Bilderfassungseinheiten 130a, insbesondere Kameras 130a, zur Erfassung einer Vielzahl von Bilddaten, welche Informationen über die aktuelle Umgebung 100 des Flurförderzeugs 120a enthalten. Neben der Bilderfassungseinheit(en) 130a kann das Flurförderzeug 120a weitere Sensoreinheiten 130a zum Erfassen einer Vielzahl von Sensordaten der aktuellen Umgebung 100 des Flurförderzeugs 120a umfassen, beispielsweise einen Radarsensor, einen Lidarsensor, einen Positionssensor, einen Orientierungssensor und/oder einen Bewegungssensor. Wie in Figur 1 angedeutet, kann die Bilderfassungseinheit 130a vorzugsweise derart an dem Flurförderzeug 120a montiert sein, dass ein Blickfeld der Bilderfassungseinheit 130a im Wesentlichen entlang einer Vorwärtsbewegungsrichtung A des Flurförderzeugs 120a liegt. Vorzugsweise kann die Bilderfassungseinheit 130a in der Symmetrieebene zwischen den zwei Lastgabeln 124a,b montiert sein. Neben der Bilderfassungseinheit 130a mit dem Blickfeld entlang der Vorwärtsbewegungsrichtung A des Flurförderzeugs 120a kann das Flurförderzeug 120a noch weitere Bilderfassungseinheiten umfassen, beispielsweise eine Bilderfassungseinheit mit einem Blickfeld entlang einer Rückwärtsbewegungsrichtung des Flurförderzeugs 120a und/oder eine Bilderfassungseinheit mit einem Blickfeld senkrecht zu der Vorwärtsbewegungsrichtung A des Flurförderzeugs 120a.

Ferner umfasst das Flurförderzeug 120a eine Steuereinheit 123, welche beispielsweise einen oder mehrere Prozessoren oder Mikro-Controller mit geeigneter Software umfassen kann und ausgebildet ist, das Flurförderzeug 120a zu steuern. Wie in der Figur 1 dargestellt, kann die Steuereinheit 123 ferner eine Kommunikationsschnittstelle 123b sowie einen, insbesondere nichtflüchtigen, Speicher 123c aufweisen. Der Speicher 123c kann ausgebildet sein, Daten und ausführbaren Programmcode zu speichern, der, wenn von dem Prozessor 123a der Steuereinheit 123 ausgeführt, den Prozessor 123a veranlasst, die im Folgenden beschriebenen Funktionen, Operationen und Verfahren durchzuführen. Wie dies nachstehend detaillierter beschrieben wird, ist die Steuereinheit 123 erfindungsgemäß ausgebildet, bildliche Zusatzinformationen zu den Bilddaten der Vielzahl von Bilddaten hinzuzufügen, die von der einen oder mehreren Bilderfassungseinheiten 130a im Betrieb des Flurförderzeugs 120a erfasst werden.

Erfindungsgemäß umfasst das Flurförderzeug 120a ferner eine Datenbrille 128, insbesondere eine Augmented-Reality- (AR-) Datenbrille 128 oder ein Head Mounted Display 128, welche von einem Fahrer des Flurförderzeugs 120a,b aufsetzbar ist, d.h. getragen werden kann und ausgebildet ist, im Betrieb, d.h. bei einer Bewegung des Flurförderzeugs 120a die bildlichen Zusatzinformationen, insbesondere die Vielzahl von Bilddaten zusammen mit den hinzugefügten bildlichen Zusatzinformationen, auf einem Anzeigeelement der AR-Datenbrille 128 darzustellen, insbesondere in einem Bereich des Anzeigeelements, der in einem sekundären Blickfeld des Fahrers des Flurförderzeugs 120a, liegt. Eine geeignete Datenbrille 128 wird beispielsweise unter dem Produktnamen Vuzix M400 oder Vuzix M4000 vertrieben, welche ein Anzeigeelement in Form eines flexibel einstellbaren Displays umfassen, das seitlich vor dem Auge positioniert werden kann.

Wie in Figur 1 dargestellt, umfasst in einer Ausführungsform das Flurförderzeug 120a eine Kommunikationsschnittstelle 126, welche ausgebildet ist, drahtlos oder drahtgebunden die bildlichen Zusatzinformationen, insbesondere die Vielzahl von Bilddaten zusammen mit den hinzugefügten bildlichen Zusatzinformationen, welche von der Steuereinheit 123 bereitgestellt werden, an die Datenbrille 128 zu übertragen. Gemäß einer weiteren Ausführungsform ist die Kommunikationsschnittstelle 126 ausgebildet, mit der Kommunikationsschnittstelle 113 des Servers 110 zu kommunizieren und die bildlichen Zusatzinformationen von dem Server 110 zu erhalten, um diese an die Steuereinheit 123 bzw. die Datenbrille 128 weiterzuleiten.

Bei den bildlichen Zusatzinformationen, die von der AR-Datenbrille 128 insbesondere zusätzlich zu den Bilddaten dargestellt werden, kann es sich insbesondere um Kollisionsinformationen, Entfernungsinformationen, und/oder Objektinformationen zu wenigstens einem in der Vielzahl von Bilddaten detektierten Objekt in der Umgebung 100 des Flurförderzeugs 120a handeln. Gemäß einer Ausführungsform werden die Kollisionsinformationen, Entfernungsinformationen, und/oder Objektinformationen zu dem wenigstens einem in der Vielzahl von Bilddaten detektierten Objekt von der Steuereinheit 123 mittels eines Machine Learning, ML, Modells, insbesondere neuronalen Netzwerks, erzeugt, welches von der Steuereinheit 123 des Flurförderzeugs 120a implementiert ist.

Die Datenbrille 128 kann als HMD (Head-Mounted Display) ausgebildet sein. Insbesondere kann die Datenbrille 128 eine Arbeitsbrille 128 eines Nutzers der Datenbrille 128 bzw. Fahrers des Flurförderzeugs 120a,b sein. Je nach Blickrichtung des Nutzers der Datenbrille 128 bzw. Fahrers des Flurförderzeugs 120a,b kann ein Kamerabild, d.h. Bilddaten der Vielzahl von Bilddaten, ausgewählt werden, das für die jeweilige Blickrichtung relevante Zusatzinformation darstellt. Beispielsweise können auch weitere zusätzliche Informationen wie Abstände und Kollisionswarnungen angezeigt werden. Das Kamerabild kann beispielsweise im sekundären Blickfeld, wie beispielsweise seitlich unten, dargestellt werden, wo die Hauptblickrichtung des Fahrers bzw. Nutzers weniger gestört wird. Das Kamerabild, d.h. Bilddaten der Vielzahl von Bilddaten, kann in Position und Größe variabel sein (je nach aktueller Kamerawahl) oder auch durch den Fahrer bzw. Nutzer einstellbar sein.

Neben der Möglichkeit, ein Kamerabild auf dem Anzeigeelement darzustellen, kann durch die Zusatzinformationen somit eine Information angezeigt werden, die vom Fahrer bzw. Nutzer einfacher und schneller verarbeitet werden kann. Beispielsweise können folgende Darstellungen angezeigt werden: Kamerabilder mit überlagerter Information, z.B. Warnsymbole oder farbige Umrandungen von Objekten; aus mehreren Kamerabildern erzeugte virtuelle Perspektiven (z.B. Draufsicht); schematische Darstellungen (z.B. schematische Draufsicht); und/oder Warnsymbole (z.B. Warnung vor drohender Kollision, Fußgängersymbol).

Zur Erfassung der Warnungen kann die Steuereinheit 123 und/oder die Servervorrichtung 110 ausgebildet sein, eine oder mehrere der folgenden Schritte durchführen.

In einem ersten Schritt kann die Umgebung 100 des Flurförderzeugs 120a,b durch Kameras 130a am Fahrzeug, insbesondere 2D-Kameras und/oder 3D-Kameras, und insbesondere durch Kameras 130b der Infrastruktur und/oder weitere Sensorik, wie beispielsweise Lidar und/oder Ultraschall, erfasst werden.

In einem zweiten Schritt kann die Steuereinheit 123 und/oder die externe Servervorrichtung 110 ausgebildet sein, ein semantisches Verständnis der Umgebung 100, d.h. beispielweise über eine Objektklassifizierung, eine aktuelle Trajektorie von Objekten der Umgebung 100 und/oder des Flurförderzeugs 120a,b, und/oder eine Vorhersage einer Trajektorie von Objekten der Umgebung 100 und/oder des Flurförderzeugs 120a,b) zu bestimmen, insbesondere durch Kl-Methoden, d.h. das ML-Modell.

In einem dritten Schritt kann die Steuereinheit 123 und/oder die externe Servervorrichtung 110 ausgebildet sein, eine Umgebungssituation der Umgebung 100 bzgl. Kritikalität zu bestimmen, insbesondere durch KI-Methoden, d.h. das ML-Modell. Hierbei kann, insbesondere durch das ML-Modell, eine Kollisionswahrscheinlichkeit zwischen den Objekten der Umgebung 100 und/oder zwischen einem Objekt der Umgebung 100 und dem Flurförderzeug 120a,b bestimmt werden. Ferner kann, insbesondere durch das ML-Modell, bestimmt werden, ob der Fahrer des Flurförderzeug 120a,b bzw. Nutzers der Datenbrille 128 die Situation wahrscheinlich wahrnimmt, insbesondere basierend auf einer Kopforientierung des Nutzers bzw. Fahrers und/oder einer in der Fahrsteuerung erfassten Reaktion des Nutzers bzw. Fahrers auf die Situation.

In einem vierten Schritt kann die Steuereinheit 123 und/oder die externe Servervorrichtung 110 ausgebildet sein, eine Warnung, d.h. die bildliche Zusatzinformation, zu erzeugen und an das Anzeigeelement der Datenbrille 128 zur Darstellung zu übermitteln.

Gemäß einer Ausführungsform ist die Datenbrille 128 ausgebildet, fortlaufend die Kopforientierung und/oder die Blickrichtung des Fahrers des Flurförderzeugs 120a zu bestimmen, beispielsweise mittels Head-Tracking und/oder Iris-Tracking. In einer Ausführungsform ist die Datenbrille 128 ausgebildet, die bildlichen Zusatzinformationen, insbesondere die Vielzahl von Bilddaten zusammen mit den hinzugefügten bildlichen Zusatzinformationen, in einem Bereich des Anzeigeelements der Datenbrille 128 darzustellen, der von der Kopforientierung und/oder der Blickrichtung des Fahrers des Flurförderzeugs 120a,b abhängt. Wenn der Fahrer beispielsweise nach rechts blickt, kann die Datenbrille 128 die Vielzahl von Bilddaten zusammen mit den hinzugefügten bildlichen Zusatzinformationen in einem rechts liegenden Bereich des Anzeigeelements darstellen, während, wenn der Fahrer nach links blickt, die Vielzahl von Bilddaten zusammen mit den hinzugefügten bildlichen Zusatzinformationen in einem links liegenden Bereich des Anzeigeelements der Datenbrille dargestellt werden.

Wie bereits vorstehend beschrieben, kann das Flurförderzeug 120a eine Vielzahl von Bilderfassungseinheiten 130a, insbesondere Kamera 130a, mit unterschiedlichen Bilderfassungsrichtungen, d.h. unterschiedlichen Blickrichtungen umfassen. Bei einer solchen Ausführungsform kann die Datenbrille 128 ausgebildet sein, jeweils nur die Bilddaten der Vielzahl von Bilddaten darzustellen, die aktuell mit der Bilderfassungseinheit der Vielzahl von Bilderfassungseinheiten 130a erfasst werden, deren Bilderfassungsrichtung der Blickrichtung bzw. Kopforientierung des Fahrers des Flurförderzeugs 120a entspricht.

## Patentansprüche

1. Flurförderzeug (120a,b) zum Transport von Warenobjekten (140), insbesondere in einem Warenlager, wobei das Flurförderzeug (120a,b) umfasst:
eine oder mehrere Bilderfassungseinheiten (130a), welche ausgebildet sind, eine Vielzahl von Bilddaten der Umgebung des Flurförderzeugs (120a,b) zu erfassen;
eine Steuereinheit (123), welche ausgebildet ist, bildliche Zusatzinformationen zu den Bilddaten der Vielzahl von Bilddaten hinzuzufügen; und
eine Datenbrille (128), welche von einem Fahrer des Flurförderzeugs (120a,b) aufsetzbar ist und ausgebildet ist, die bildlichen Zusatzinformationen, insbesondere die Vielzahl von Bilddaten zusammen mit den hinzugefügten bildlichen Zusatzinformationen, auf einem Anzeigeelement der Datenbrille (128) darzustellen, insbesondere in einem Bereich des Anzeigeelements, der in einem sekundären Blickfeld des Fahrers des Flurförderzeugs (120a,b) liegt.

2. Flurförderzeug (120a,b) nach Anspruch 1, wobei das Flurförderzeug (120a,b) ferner ein Lastaufnahmemittel (124a,b) umfasst, welches ausgebildet ist, die Warenobjekte (140) aufzunehmen.

3. Flurförderzeug (120a,b) nach Anspruch 1 oder 2, wobei das Flurförderzeug (120a,b) als Gabelstapler (120a,b) ausgebildet ist.

4. Flurförderzeug (120a,b) nach einem der vorhergehenden Ansprüche, wobei das Flurförderzeug (120a,b) ferner eine Kommunikationsschnittstelle (126) aufweist, welche ausgebildet ist, drahtlos oder drahtgebunden die Vielzahl von Bilddaten zusammen mit den hinzugefügten bildlichen Zusatzinformationen an die Datenbrille (128) zu übertragen.

5. Flurförderzeug (120a,b) nach Anspruch 4, wobei die Kommunikationsschnittstelle (126) ferner ausgebildet ist, die bildlichen Zusatzinformationen von einer externen Servervorrichtung (110) zu erhalten und an die Steuereinheit (123) weiterzuleiten.

6. Flurförderzeug (120a,b) nach einem der vorhergehenden Ansprüche, wobei die Datenbrille (128) ausgebildet ist, eine Kopforientierung und/oder eine Blickrichtung des Fahrers des Flurförderzeugs (120a,b) zu bestimmen.

7. Flurförderzeug (120a,b) nach Anspruch 6, wobei die Datenbrille (128) ausgebildet ist, die Vielzahl von Bilddaten zusammen mit den hinzugefügten bildlichen Zusatzinformationen in einem Bereich des Anzeigeelements der Datenbrille (128) darzustellen, der von der Kopforientierung und/oder der Blickrichtung des Fahrers des Flurförderzeugs (120a,b) abhängt.

8. Flurförderzeug (120a,b) nach Anspruch 6 oder 7, wobei das Flurförderzeug (120a,b) eine Vielzahl von Bilderfassungseinheiten (130a) mit unterschiedlichen Bilderfassungsrichtungen umfasst, welche ausgebildet sind, die Vielzahl von Bilddaten der Umgebung des Flurförderzeugs (120a,b) in den unterschiedlichen Bilderfassungsrichtungen zu erfassen, und wobei die Datenbrille (128) ausgebildet ist, die Bilddaten der Vielzahl von Bilddaten darzustellen, die mit der Bilderfassungseinheit der Vielzahl von Bilderfassungseinheiten (130a) erfasst werden, deren Bilderfassungsrichtung der Blickrichtung des Fahrers des Flurförderzeugs (120a,b) entspricht.

9. Flurförderzeug (120a,b) nach einem der vorhergehenden Ansprüche, wobei die der Vielzahl von Bilddaten hinzugefügten bildlichen Zusatzinformationen Kollisionsinformationen, Entfernungsinformationen, und/oder Objektinformationen zu wenigstens einem in der Vielzahl von Bilddaten detektierten Objekt umfassen.

10. Flurförderzeug (120a,b) nach Anspruch 9, wobei die Kollisionsinformationen, Entfernungsinformationen, und/oder Objektinformationen zu dem wenigstens einem in der Vielzahl von Bilddaten detektierten Objekt auf einem Machine Learning, ML, Modell basieren, insbesondere einem neuronalen Netzwerk, welches von der Steuereinheit (123) des Flurförderzeugs (120a,b) implementiert ist.
